# EUROPÄISCHE PATENTSCHRIFT

(11) **EP 0 431 267 B1**
(45) Veröffentlichungstag und Bekanntmachung des Hinweises auf die Patenterteilung: **26.06.1996**
(21) Anmeldenummer: 90117697.4
(22) Anmeldetag: 14.09.1990
(51) Int. Cl.: G06K 13/063, G07D 7/00

(54) **Vorrichtung zum Ausrichten von Blättern**
Sheet aligning device
Dispositif pour aligner des feuilles

(30) Priorität: 07.12.1989 CH 4401/89
(43) Veröffentlichungstag der Anmeldung: 12.06.1991
(73) Patentinhaber: MARS INCORPORATED, McLean Virginia 22101-3885 (US)
(72) Erfinder: André, Gerlier, F-74140 Sciez (FR)
(74) Vertreter: Burke, Steven David

(56) Entgegenhaltungen:
- EP-A- 0 206 675
- US-A- 3 603 446
- US-A- 4 163 157
- US-A- 4 438 917
- US-A- 4 855 607

## Beschreibung

Die Erfindung bezieht sich auf eine Vorrichtung zum Ausrichten von Blättern der im Oberbegriff des Anspruchs 1 genannten Art Solche Vorrichtungen eignen sich beispielsweise zum Ausrichten von Banknoten in Dienstleistungsautomaten.

Werden rechteckförmige Blätter zwischen Förderbändern oder zwischen Rollen auf einem langen, gewundenen Transportweg mit vielen Uebergabestellen zwischen den Transportmitteln zu einer Stapeleinrichtung oder zu einer Prüfeinrichtung geführt, ist eine Verdrehung des einzelnen Blattes in seiner Ebene gegenüber einer idealen Lage nicht auszuschliessen. Besonders häufig ergibt sich eine grosse Verdrehung bereits beim manuellen Eingeben des Blattes, z. B. einer Banknote bei Dienstleistungsautomaten. Diese Automaten und Einrichtungen benötigen daher eine Ausrichtvorrichtung.

Bei einer bekannten mechanischen Ausrichtvorrichtung (DE-OS 3 441 997) wird die Banknote mit einer Längsberandung gegen eine senkrecht zur Transportebene und vertikal auf der Ausrichtebene angeordnete verschiebbare Verschlussplatte geschoben und dadurch auf diese ausgerichtet. Anschliessend wird die Verschlussplatte aus der Transportebene entfernt und die kurzzeitig angehaltene Banknote weiter transportiert.

US-A-4 438 917 beschreibt eine Vorrichtung gemäß dem Oberbegriff des Anspruchs 1 für eine Blattzufuhr, bei der zwei Antriebsrollen von unabhängig voneinander steuerbaren Motoren angetrieben werden. Sensoren erfassen den schrägen Einlauf des Blattes und die Motoren werden so gesteuert, daß das Blatt gerade gerichtet wird. Dabei wird der Motorlauf jeweils von einem Tachometer überwacht.

US-A-4 855 607 offenbart eine Vorrichtung zur Ausrichtung eines sich bewegenden Trägers. Die Vorrichtung weist eine Sensorreihe und ein Paar Antriebsrollen mit Antriebsmotoren auf. Die Laufrichtung der Antriebsmotoren wird so gesteuert, daß sich die Breite eines die Sensorreihe deckenden Streifens und somit die Schräglage des Trägers verringert.

Der Erfindung liegt die Aufgabe zugrunde, eine Vorrichtung der eingangs genannten Art zu schaffen, die rechteckförmige Blätter aus einem vorbestimmten Satz verschiedener Blattgrössen rasch und zuverlässig mit einer vorbestimmten seite parallel zu ihrer Vorschubrichtung ausrichten.

Die Lösung dieser Aufgabe gelingt mit der Vorrichtung nach Anspruch 1. Vorteilhafte Ausgestaltungen ergeben sich aus den Unteransprüchen.

Nachfolgend werden Ausführungsbeispiele der Erfindung anhand der Zeichnungen näher erläutert.

Es zeigt:
- Fig. 1: eine Ausrichtvorrichtung,
- Fig. 2: einen Querschnitt durch eine Antriebsgruppe,
- Fig. 3: eine Abhebevorrichtung,
- Fig. 4: eine Transporteinrichtung und die Ausrichtvorrichtung im Querschnitt,
- Fig. 5: einen direkten Antrieb und
- Fig. 6: die Ausrichtvorrichtung mit optischen Sensoren.

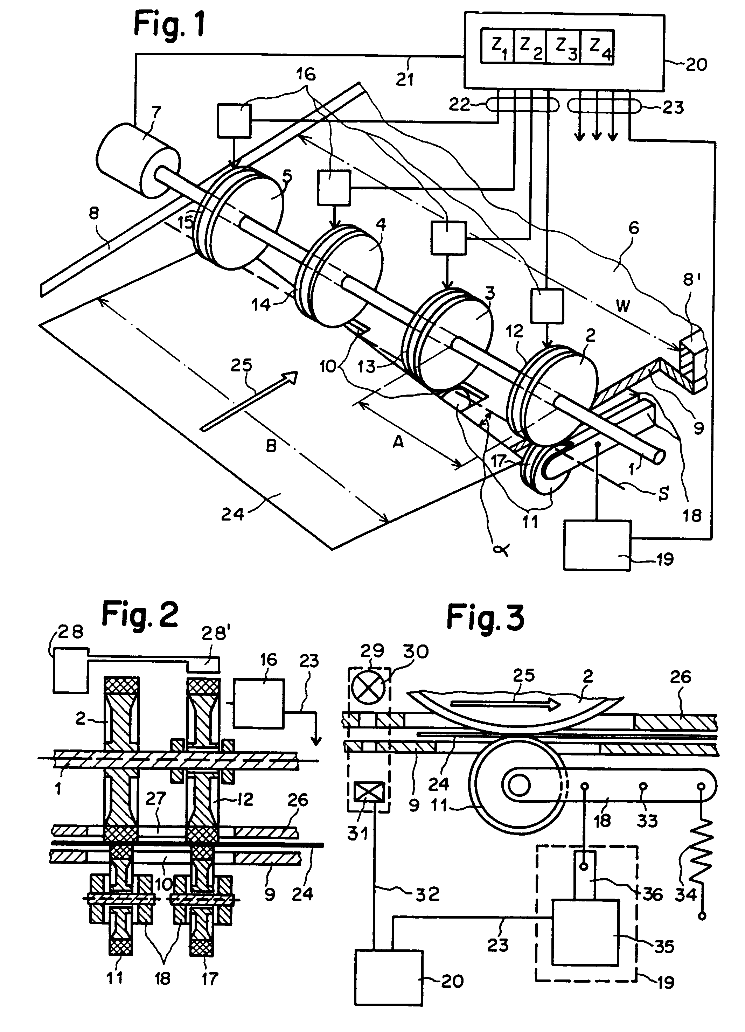

In der Figur 1 bedeutet 1 eine Antriebswelle mit gleich grossen Antriebsrollen 2 bis 5, die auf der Antriebswelle 1 in gleichen Abständen A angeordnet und mit ihr fest verbunden sind. Beispielhaft ist in der Zeichnung eine Ausrichtvorrichtung mit vier Antriebsrollen 2 bis 5 gezeigt. Die Antriebswelle 1 erstreckt sich über die ganze Breite W einer Ausrichtebene 6 und ist parallel zur Ausrichtebene 6 so angeordnet, dass Laufflächen jeder Antriebsrolle 2, 3, 4 bzw. 5 die eine Seite der Ausrichtebene 6 berühren. Die Antriebswelle 1 ist auf der einen Seite mit einem Antriebsmotor 7 verbunden, der ausserhalb einer seitlichen Begrenzung 8 der Ausrichtebene 6 befestigt ist und alle Antriebsrollen 2 bis 5 gemeinsam antreibt. Die Begrenzung 8 und eine zu ihr parallele Begrenzung 8' bestimmen die Breite W der Ausrichtebene 6.

Die den Antriebsrollen 2 bis 5 gegenüberliegende Seite der Ausrichtebene 6 ist durch eine Bodenplatte 9 gebildet. Die Bodenplatte 9 weist im Bereich der Antriebsrollen 2 bis 5 einen Ausschnitt 10 auf. In der Zeichnung ist die Bodenplatte 9 im Bereich der Antriebsrolle 2 aus darstellerischen Gründen weiter ausgeschnitten, um unter der Bodenplatte 9 liegende Details zu zeigen.

Auf jeder Lauffläche der Antriebsrollen 2 bis 5 rollt eine Andruckrolle 11 ab. Sie ist auf der zweiten Seite der Ausrichtebene 6 so angeordnet, dass die Ausrichtebene 6 die gemeinsame Tangentialebene zwischen den Antriebsrollen 2 bis 5 und den Andruckrollen 11 bildet. Je eine der Antriebsrollen 2 bis 5 und eine Andruckrolle 11 bilden ein Rollenpaar.

In unmittelbarer Nähe jeder der Antriebsrollen 2 bis 5 ist ein als Drehgeber 16 ausgebildeter Messgeber angeordnet, der einen mittels einer der Antriebsrollen 2 bis 5 in der Ausrichtebene 6 bewirkten lokalen Vorschub eines von den Rollenpaaren erfassten Blattes 24 misst.

Die Antriebsrollen 2 bis 5 weisen mit Vorteil ein auf ihrer einen Seite angeordnetes Messrad 12, 13, 14 bzw. 15 auf. Es besitzt den gleichen Umfang wie die Antriebsrollen 2 bis 5, ist nur seitlich in achsialer Richtung geführt und frei um die gemeinsame Antriebswelle 1 drehbar gelagert. Der kostengünstige Drehgeber 16 erfasst eine Drehbewegung des Messrades 12, 13, 14 bzw. 15, die direkt ein Mass des lokalen Vorschubs des Blattes 24 ist. Auf der Lauffläche der Messräder 12 bis 15 rollt ein Anpressrad 17. Je eines der Messräder 12 bis 15 und ein Anpressrad 17 bilden ein Radpaar, das ebenfalls als gemeinsame Tangentialebene die Ausrichtebene 6 aufweist. Ein Rollenpaar und das unmittelbar benachbarte Radpaar bilden eine Antriebsgruppe.

Vorzugsweise beträgt der Durchmesser der Antriebsrollen 2 bis 5 und der Messräder 12 bis 15 etwa 40 mm, deren Laufflächen etwa eine Breite von 3 mm aufweisen. Das Rollenpaar und das Radpaar der gleichen Antriebsgruppe sind etwa 5 mm voneinander entfernt.

Die Andruckrollen 11 und die Anpressräder 17 weisen vorzugsweise die gleichen Durchmesser auf, z. B. 10 mm mit 3 mm breiten Laufflächen. Sie sind einzeln mittels Gabeln 18 geführt, wobei jede Gabel 18 drehbar in einer zur Antriebswelle 1 lotrechten Ebene gelagert ist. Die Gabeln 18 drücken unter der Wirkung einer Andruckkraft die Andruckrollen 11 bzw. die Anpressräder 17 federnd gegen die Lauffläche der Antriebsrollen 2 bis 5 bzw. der Messräder 12 bis 15. Die Antriebswelle 1 und die Achsen der Andruckrollen 11 und der Anpressräder 17 bestimmen eine zur Bodenplatte 9 senkrechte gemeinsame Achsebene, die die Ausrichtebene 6 in einer Schnittlinie S schneidet. In der Schnittlinie S berühren die Andruckrollen 11 bzw. die Anpressräder 17 die Laufflächen der Antriebsrollen 2 bis 5 bzw. der Messräder 12 bis 15.

Die einer Andruckrolle 11 zugeordneten Gabeln 18 sind z. B. mechanisch mit je einer Abhebevorrichtung 19 verbunden. Die Abhebevorrichtungen 19 vermögen die Andruckrollen 11 unabhängig voneinander gegen die Andruckkraft von der Lauffläche der Antriebsrolle 2, 3, 4 bzw. 5 abzuheben.

Die Ausrichtvorrichtung wird durch eine Steuereinrichtung 20 vervollständigt. Sie ist mittels Leitungen 21 bis 23 mit dem Antriebsmotor 7, den Drehgebern 16 und den Abhebevorrichtungen 19 verbunden. Die steuereinrichtung 20 enthält für jeden Drehgeber 16 einen vor- und rückwärts zählenden Zähler, dessen Zählerstand Z₁, Z₂, Z₃ bzw. Z₄ auslesbar und mit denen der andern Zähler vergleichbar ist.

Das Blatt 24 ist ein rechteckförmiges Blatt aus einem vorbestimmten Satz verschiedener Blattgrössen. Es wird beispielsweise quer zu seiner Längsberandung in einer mit einem Pfeil angedeuteten Vorschubrichtung 25 in der Ausrichtebene 6 befördert. Im allgemeinen erreicht das Blatt 24 die Ausrichtebene 6 nicht parallel zur Schnittlinie S ausgerichtet, sondern die Längsberandung schliesst mit der Schnittlinie S einen Verdrehungswinkel α ein.

Die Breite W der Ausrichtebene 6 ist vorzugsweise um einen vorbestimmten Betrag grösser als eine Länge B der Längsberandung des grössten vorbestimmten Blattes 24, damit die Ausrichtvorrichtung auch das grösste Blatt 24 mit dem vorbestimmten maximal zulässigen Betrag des Verdrehungswinkels α aufnehmen kann. Dieser maximale Betrag hängt von der Blattform ab und ist beispielsweise 20°.

Mit Vorteil ist der Abstand A zwischen den Antriebsrollen 2 bis 5 kleiner als die mit einem vorbestimmten Faktor verkleinerte Länge B des kleinsten Blattes 24 aus dem vorbestimmten Satz verschiedener Blattgrössen. Der Faktor entspricht dem halben Betrag des Cosinus für den maximalen Verdrehungswinkel α. Daher ist auch das kleinste Blatt 24 aus dem vorgegebenen Satz bei allen zulässigen Verdrehungswinkeln α und unabhängig von seiner Lage auf der Ausrichtebene 6 von wenigstens zwei der Antriebsrollen 2 bis 5 erfassbar. Zwischen der Begrenzung 8 und einer der beiden äussersten Antriebsgruppen beträgt die Entfernung etwa der halbe Abstand A.

Der Ausrichtvorrichtung wird das Blatt 24 mit dem Verdrehungswinkel α von einer hier nicht gezeigten ersten Transporteinrichtung in der Vorschubrichtung 25 in der Ausrichtebene 6 zugeführt. Einige der Rollenpaare erfassen das Blatt 24 und richten es parallel zur Schnittlinie S aus, d. h. sie reduzieren den Verdrehungswinkel α auf Null, wie weiter unten beschrieben ist. In dieser Lage wird es von einer hier nicht gezeigten zweiten Transporteinrichtung übernommen und abtransportiert.

Die Figur 2 zeigt einen Schnitt durch die gemeinsame Achsebene beispielhaft für die erste Antriebsgruppe. Sie umfasst die fest auf der Antriebswelle 1 sitzende Antriebsrolle 2, die Andruckrolle 11, das drehbar gelagerte Messrad 12 und das Anpressrad 17. Die Andruckrolle 11 bzw. das Anpressrad 17 ist zwischen den beiden Fingern einer der beiden Gabeln 18 drehbar gelagert.

Das Rollenpaar 2, 11 und das Radpaar 12, 17 klemmen das Blatt 24 ein. Auf der der Antriebswelle 1 zugewandten Seite des Blattes 24 deckt eine Deckplatte 26 die Ausrichtebene 6 ab und bildet mit der Bodenplatte 9 und den Begrenzungen 8, 8' (Figur 1) einen Kanal. Die Deckplatte 26 weist über jedem Ausschnitt 10 der Bodenplatte 9 ein Fenster 27 auf, um die Antriebsrolle 2 und das Messrad 12 nicht zu behindern.

Der Drehgeber 16 ertastet jede Drebewegung des Messrades 12, beispielsweise auf optischem oder auf mechanischem Wege. Ueber die Leitung 23 gelangen Signalimpulse zum Zähler in der Steuereinrichtung 20 (Figur 1). Jede durch einen lokalen Vorschub des Blattes 24 zwischen dem Radpaar 12, 17 bewirkte Drehung des Messrades 12 wird in beiden Drehrichtungen mit dem richtigen Vorzeichen registriert, so dass der Stand des zugehörigen zählers in der Steuereinrichtung 20 ein Mass für den lokalen Vorschub des Blattes 24 unter dem Messrad 12 darstellt.

Vorteilhaft ist ein aus dem Messrad 12 und dem Anpressrad 17 gebildetes Radpaar mit einer Bremseinrichtung 28 ausgerüstet, deren Bremswirkung vorbestimmt einstellbar ist. Die Bremswirkung verhindert einerseits, dass sich die Räder 12 und 17 des Radpaares wegen ihrer fast reibungsfreien Lagerung infolge ihrer Drehimpulse weiter drehen, wenn das Blatt 24 vom Radpaar nicht mehr berührt wird, und bewirkt andererseits, dass eine für das Ausrichten benötigte vorbestimmte Reibkraft des Radpaares vorhanden ist. Die Wirkung der Bremseinrichtung 28 ist beispielsweise über eine hier nicht gezeigte Leitung von der Steuereinrichtung 20 vorzugsweise zwischen einem minimalen und einem maximalen vorbestimmten Wert umschaltbar.

Beispielhaft ist in der Figur 2 eine einfache mechanische Bremseinrichtung 28 gezeigt, die einen Bremsbelag 28' auf die Lauffläche des Messrades 12 absenkt, um die Bremswirkung zu erzielen. Die gleiche Wirkung kann beispielsweise auch durch ein Abbremsen des Anpressrades 17 erzielt werden, wobei der Belag auf der Lauffläche des Messrades 12 geschont und das Messergebnis infolge der Abnahme des Durchmessers nicht verfälscht wird. Auch andere Bremssysteme, wie z. B. eine elektrodynamische Bremse, sind verwendbar.

Vorzugsweise weisen die Laufflächen der Rollen- und Radpaare einen Belag mit einem grossen Haftreibungskoeffizienten auf, um einen ungewollten Schlupf zwischen den Rollen- bzw. Radpaaren und dem Blatt 24 zu verhindern, da dies das genaue Ausrichten verunmöglicht. Diese Wirkung des Belages ist direkt von der Anpresskraft der Andruckrolle 11 bzw. des Anpressrades 17 abhängig.

Die Figur 3 zeigt als Beispiel das Rollenpaar 2, 11 und dessen Abhebevorrichtung 19. Von der Antriebsrolle 2 ist aus darstellerischen Gründen nur ein Segment unmittelbar über dem Blatt 24 dargestellt.

In einer vorbestimmten Entfernung vor der Schnittlinie S (Figur 1) ist in der Vorschubrichtung 25 eine parallele Reihe von Lichtschranken 29 als Lagesensoren angeordnet, die die Anwesenheit und die Lage des Blattes 24 vor dem Ausrichten feststellen, wenn es im Kanal zwischen der Bodenplatte 9 und der Deckplatte 26 in der Vorschubrichtung 25 gegen die Rollenpaare vorgeschoben wird. Der Abstand der benachbarten Lichtschranken 29 in der Reihe ist durch den Satz der Blätter 24 vorbestimmt, beispielsweise 10 mm.

Jede der Lichtschranken 29 umfasst einen Lichtsender 30, der beispielsweise über der Deckplatte 26 angeordnet ist, und einen unter der Bodenplatte 9 befestigten Lichtempfänger 31. Ueber eine Kontrolleitung 32 ist der Lichtempfänger 31 mit der Steuereinrichtung 20 verbunden. Die Bodenplatte 9 und die Deckplatte 26 weisen genau übereinander liegende Bohrungen auf, damit der vom Lichtsender 30 erzeugte Lichtstrahl durch die Bohrungen in der Platten 9, 26 zum Lichtempfänger 31 gelangt, wenn nicht das Blatt 24 den Lichtstrahl unterbricht.

Die Gabel 18 ist um einen Drehachse 33 in der Zeichenebene drehbar. Der eine Arm der Gabel 18 trägt die Andruckrolle 11, am anderen Arm greift eine Kraft, z. B. eine Zugfeder 34, derart an, dass sie die Andruckrolle 11 gegen die Antriebsrolle 2 drückt. Gleiche Gabeln 18 und Zugfedern 34 sind für die Lagerung und die Erzeugung der Anpresskraft der Anpressräder 17 vorgesehen.

Die je einer Andruckrolle 11 zugeordneten Abhebevorrichtungen 19 umfassen in einer einfachen Ausführung jeweils einen Elektromagneten 35 mit einem Zuganker 36. Mittels eines Steuersignals auf der Steuerleitung 23 ist der Elektromagnet 35 von der Steuereinrichtung 20 her erregbar. Der Zuganker 34, der senkrecht zur Bodenplatte 9 verschiebbar ist, greift mit einem Verbindungselement zwischen der Drehachse 33 und der Achse der Andruckrolle 11 in die Gabel 18 ein. Wenn der Elektromagnet 35 erregt ist, ist der Zuganker 36 eingetaucht und die Andruckrolle 11 von der Lauffläche der Antriebsrolle 2 abgehoben. Damit ist der Kraftschluss zwischen der Antriebsrolle 2 und dem Blatt 24 aufgehoben und die Antriebsrolle 2 gleitet auf dem Blatt 24.

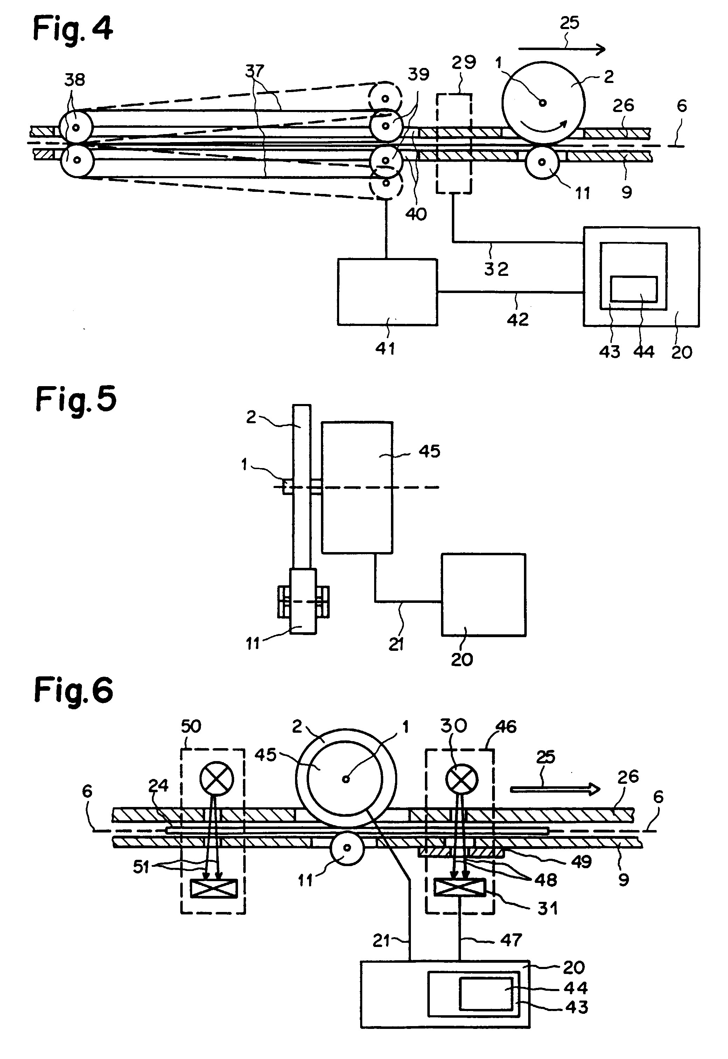

In der Figur 4 ist die erste Transporteinrichtung vor den Lichtschranken 29 angeordnet. Sie umfasst wenigstens ein Paar Transportriemen 37, die über fest angeordnete Riemenscheiben 38 und senkrecht zur Ausrichtebene 6 verschiebbare Riemenscheiben 39 laufen. Die Transporteinrichtung ist symmetrisch zur Ausrichtebene 6 aufgebaut, wobei die verschiebbaren Riemenscheiben 39 gegen die Rollenpaare gerichtet sind. Die Transportriemen 37 und die verschiebbaren Riemenscheiben 39 weisen zwei Stellungen auf, wobei die mit ausgezogenen Linien gezeichnete erste Stellung zum Transport des Blattes 24 dient und die gestrichelt gezeichnete zweite Stellung den Ausrichtvorgang ermöglicht.

Die Riemenscheiben 38 und 39 spannen in der ersten Stellung die Transportriemen 37 derart auf, dass sich die Transportriemen 37 durch Ausnehmungen 40 in der Bodenplatte 9 und in der Deckplatte 26 auf einer vorbestimmten Strecke berühren und die Ausrichtebene 6 einschliessen. Die Riemenscheiben 39 sind mit einer Verstellmechanik 41 z. B. mechanisch verbunden und werden von ihr in einer der beiden Stellungen festgehalten.

Eine Verstellsignalleitung 42 verbindet die Steuereinrichtung 20 mit der Verstellmechanik 41, welche der Verstellmechanik 41 mittels der Verstellsignalleitung 42 ein Verstellsignal übermittelt, damit die verschiebbaren Riemenscheiben 39 aus der ersten Stellung symmetrisch von der Ausrichtebene 6 weg in die gestrichelte zweite Stellung verschoben und die Transportriemen 37 aufgespreizt werden. Ausser bei den fest angeordneten Riemenscheiben 38 sind die Transportriemen 37 in der zweiten Stellung von der Ausrichtebene 6 abgehoben und geben das Blatt 24 vorzugsweise schlagartig zum Ausrichten ohne Behinderung frei. Ein hier nicht gezeigter Antrieb versetzt die Riemenscheiben 38, 39 und die Transportriemen 37 in Bewegung, wobei sie das Blatt 24 mit der gleichen Geschwindigkeit bewegen wie die Antriebsgruppen.

Die hier nicht gezeigte identische zweite Transporteinrichtung, deren Elemente nachfolgend mit den gleichen Bezugszahlen bezeichnet werden, ist nach den Rollenpaaren spiegelsymmetrisch zur ersten Transporteinrichtung angeordnet. Das ausgerichtete Blatt 24 wird in der Verschieberichtung 25 von den Rollenpaaren zwischen die aufgespreizten Transportriemen 37 der zweiten Transporteinrichtung gegen die Riemenscheiben 38 geschoben, damit nach dem Ausschalten des Verstellsignals die Transportriemen 37 auf das Blatt 24 abgesenkt werden und es zum Weitertransport erfassen.

Der Vorteil dieser Transporteinrichtungen besteht darin, dass das Blatt 24 während des ganzen Durchlaufs durch die Ausrichtvorrichtung angetrieben, während des Ausrichtens unbehindert und doch zu keinem Zeitpunkt die Bewegung des Blattes 24 unkontrollierbar ist. Nach dem Ausrichten verhindert das vollständige Erfassen eine erneute Verdrehung des Blattes 24.

Die erste Transporteinrichtung befördert in der ersten Stellung das Blatt 24 in der Vorschubrichtung 25 zu den Rollenpaaren. Eine der Lichtschranken 29 stellt dessen Anwesenheit als erste fest und schickt der Steuereinrichtung 20 mittels ihrer Kontrolleitung 32 ein Signal. Die Steuereinrichtung 20 schaltet den Antriebsmotor 7 (Figur 1) ein und versetzt die Antriebswelle 1 z. B. im Gegenuhrzeigersinn in Bewegung, wie diese mittels eines Pfeils auf der Antriebsrolle 2 andeutet ist.

Die Steuereinrichtung 20 schaltet die Abhebeeinrichtungen 19 (Figur 3) und die Wirkung der Bremseinrichtung 28 (Figur 2) aus, damit die Andruckrollen 11 auf den Laufflächen der Antriebsrollen 2 bis 5 (Figur 1) aufsetzen und sich die Radpaare frei drehen lassen.

Die Transporteinrichtung befördert das Blatt 24 weiter gegen die Rollenpaare bzw. Antriebsgruppen, die in der Figur 3 beispielhaft durch die Antriebsrolle 2 und die Andruckrolle 11 dargestellt sind. Nacheinander bedeckt die vordere Längsberandung des Blattes 24 nebeneinanderliegende Lichtschranken 29. Aus der Reihenfolge der Signale der Lichtschranken 29 ermittelt die Steuereinrichtung 20 die Lage der vorderen Berandung des Blattes 24 und den Verdrehungswinkel α (Figur 1) sowie die beiden für das Ausrichten des Blattes 24 optimalen Antriebsgruppen. Diese Vorsichtsmassnahme stellt sicher, dass keine der ausgewählten Antriebsgruppen über eine der seitlichen Berandungen des Blattes 24 hinwegrollt.

Sobald das Blatt 24 mit der vorderen Längsberandung von einem der Radpaare erfasst wird, beginnt sich das entsprechende der Messräder 12 bis 15 (Figur 1) zu drehen und der zugeordnete Drehgeber 16 (Figur 1) sendet die Signalimpulse zur Steuereinrichtung 20, die sie in seinem zugeordneten Zähler entsprechend der Drehrichtung des Messrades 12, 13, 14 bzw. 15 aufsummiert. Ist einer der beiden ausgewählten Zählerstände Z₁ bis Z₄ (Figur 1) verschieden von Null, sendet die Steuereinrichtung 20 über die Verstellsignalleitungen 42 das Verstellsignal zur Verstellmechanik 41 der beiden Tranporteinrichtungen. Das von den Transportriemen 37 freigegebene Blatt 24 wird nun allein von wenigstens einer der Antriebsrollen 2 bis 5 befördert.

Vorteilhaft enthält die Steuereinrichtung 20 eine elektronische programmierbare Steuerung 43 mit einem Wertespeicher 44, wobei die elektronische Steuerung 43 z. B. alle Funktionen der Steuereinrichtung 20 übernimmt und der Wertespeicher 44 Messwerte und vorbestimmte Einstellparameter aufnimmt, z. B. die Abmessungen der Blätter 24 aus dem vorbestimmten Satz, die die Bestimmung des Verdrehungswinkel α wesentlich vereinfachen.

Der Ausrichtvorgang soll anhand des in der Zeichnung der Figur 1 dargestellten Beispiels beschrieben werden. Die erste Transporteinrichtung (Figur 4) schiebt das Blatt 24 in der Ausrichtebene 6 gegen die Rollenpaare vor. Das Blatt 24 ist schief gegen die Schnittlinie S mit einem zufälligen Wert des Verdrehungswinkel α ausgerichtet. Es wird nacheinander von der vierten, dritten und zweiten Antriebsgruppe erfasst. Die Steuereinrichtung 20 hat mittels der Lichtschranken 29 die Lage der vorderen Längsberandung des Blattes 24 ermittelt und als optimale die beiden Antriebsgruppen mit den Rollenpaaren 5, 11 und 3, 11 sowie die zugeordneten Zählerstände Z₂ und Z₄ bestimmt.

Das Blatt 24 wird zunächst vom vierten Rollenpaar 5, 11 erfasst. Der vierte Zähler in der Steuereinrichtung 20 beginnt die Signalimpulse vom Drehgeber 16 des Messrades 15 zum Zählerstand Z₄ aufzuzählen; dies bewirkt das Aussenden eines Verstellsignals für die Transporteinrichtungen.

Da die Steuereinrichtung 20 nur die beiden ausgewählten Zählerstände Z₂ und Z₄ berücksichtigt, fällt sie keine weitere Entscheidungen, solange nur der eine Zählerstand Z₄ verschieden von Null ist.

Sobald die vordere Längsberandung des Blattes 24 auch vom ausgwählten zweiten Rollenpaar 3, 11 erfasst wird, beginnt der Zählerstand Z₂ des zweiten Zählers zu wachsen. Da jetzt die beiden Zählerstände Z₂ und Z₄ verschieden von Null sind, ermittelt die Steuereinrichtung 20 den zutreffenden Zustand aus den drei möglichen: Z₂ > Z₄, Z₂ = Z₄ und Z₂ < Z₄.

In diesem Beispiel ist der Zählerstand Z₄ grösser als der Zählerstand Z₂. Die Steuereinrichtung 20 sendet über die Steuerleitung 23 ein Steuersignal zur Abhebevorrichtung 19 des vierten Rollenpaares 5, 11 aus, um die Andruckrolle 11 abzuheben und den lokalen Vorschub zu reduzieren. Falls vorhanden, wird auch die Bremseinrichtung 28 (Figur 2) des vierten Radpaares 15, 17 eingeschaltet. Da das Blatt 24 nur noch von der zweiten Antriebsrolle 3 angetrieben und infolge der Reibung im Bereich *des* vierten Radpaares 15, 17 gebremst wird, dreht sich das Blatt 24 in der Ausrichtebene 6 um einen Drehpunkt unter dem vierten Messrad 15, wobei der zweite Zähler entsprechend dem lokalen Vorschub weiterzählt. Der vierte Zähler erhält keine oder nur noch vereinzelte Signalimpulse. Ist die Differenz der beiden Zählerstände Z₂ und Z₄ ausgeglichen, ist das Blatt 24 mit der vorderen Berandung parallel zur Schnittlinie S ausgerichtet.

Die Steuereinrichtung 20 schaltet das Steuersignal zur Abhebevorrichtung 19 des vierten Rollenpaares 5, 11 aus. Die Andruckrolle 11 presst das Blatt wieder gegen die vierte Antriebsrolle 5 und stellt den Kraftschluss der vierten Antriebsrolle 5 mit dem Blatt 24 wieder her, damit das Blatt 24 ausgerichtet die Ausrichtvorrichtung verlässt. Gleichzeitig wird das Verstellsignal auf der Verstellsignalleitung 42 ausgeschaltet und die Verstellmechanik 41 bringt die beiden Transporteinrichtungen wieder in die erste Stellung zurück, damit die zweite Transporteinrichtung den Weitertransport des ausgerichteten Blattes 24 übernimmt. Falls vorhanden, wird die Wirkung der Bremseinrichtung 28 des vierten Radpaares 15, 17 aufgehoben.

Erreicht die vordere Längsberandung des Blattes 24 zufälligerweise die beiden ausgewählten Rollenpaare 3, 11 und 4, 11 gleichzeitig, so muss die Steuereinrichtung 20 nicht eingreifen, da die Zählerstände Z₂ und Z₄ während des Transportes immer gleich sind. Das Blatt 24 wird in diesem Falle einfach weiter transportiert.

Ein analoger Vorgang spielt sich ab, wenn die vordere Berandung des Blattes 24 zuerst das zweite Rollenpaar 3, 11 erreicht, oder wenn beim Ausrichtvorgang das Blatt 24 z. B. von der ersten und der dritten bzw. von der ersten und der vierten Antriebsgruppe oder von zwei benachbarten Antriebsgruppen ausgerichtet wird.

Die Ausrichtvorrichtung weist den Vorteil auf, dass sie zum Ausrichten das Blatt 24 nur auf der voreilenden Seite verzögert und, ohne das Blatt 24 anzuhalten, es bei hoher Geschwindigkeit ausrichtet. Die Genauigkeit des Ausrichtens ist durch das Auflösungsvermögen des Messgebers (Drehgebers 16) bestimmt. Die beschriebene Ausrichtvorrichtung weist beispielhaft vier Antriebsgruppen und vier in der Steuereinrichtung 20 integrierte, jeder Antriebsgruppe zugeordnete Zähler auf. In anderen Ausführungen weist die Ausrichtvorrichtung wenigstens zwei Rollenpaare mit ihren Messgebern und ihren in der Steuereinrichtung 20 zugeordneten Zählern auf, wobei die Anzahl dieser Rollenpaare von der Breite W und von den Abmessungen des vorbestimmten Satzes der Blätter 24 bestimmt ist.

Anstelle der jeder Transporteinrichtung zugeordneten unabhängigen Verstelleinrichtung 41 (Figur 4) kann auch eine einzige Verstelleinrichtung 41 gemeinsam auf beide Transporteinrichtungen wirkend angeordnet sein.

Eine Ausführung der Antriebsgruppe nach der Figur 5 weist vorteilhaft Rollenpaare mit je einem direkten, unabhängigen Antrieb mittels eines Schrittmotors 45 auf, wobei die Bremseinrichtung 28 (Figur 2) entfällt. Stellvertretend für die Rollenpaare der Ausrichtvorrichtung ist in der Zeichnung beispielhaft das Rollenpaar 2, 11 dargestellt.

Die Antriebsrolle 2 ist auf der Antriebwelle 1 des Schrittmotors 45 gelagert. Jeder Schrittmotor 45 ist über seine unabhängige Leitung 21 mit der Steuereinrichtung 20 verbunden und wird mittels einer Antriebsimpulsfolge in Umdrehung versetzt. Die Antriebswellen 1 aller Rollenpaare sind nebeneinander quer zur Vorschubrichtung 25 (Figur 1) angeordnet, wobei die Rollenpaare die vorbestimmten Abständen A (Figur 1) aufweisen und die Antriebswellen 1 koaxial zueinander ausgerichtet sind.

Ein vorteilhafter kostengünstiger Messgeber anstelle des Drehgebers 16 ist ein optischer Sensor, der keine bewegbaren mechanischen Teile besitzt. Die Elemente 12 bis 17 (Figur 2) entfallen in dieser Ausführung, so dass die Antriebsgruppen auf die Rollenpaare reduziert sind.

Der optische Sensor gemäss der Figur 6 ist mit Vorteil in der Vorschubrichtung 25 in einer vorbestimmten Distanz nach der Schnittlinie S (Figur 1) vorgesehen und ist als Lichtfühler 46 mittels einer Fühlerleitung 47 mit der Steuereinrichtung 20 verbunden.

Ein Lichtstrahl 48 des Lichtfühlers 46 ist senkrecht zur Ausrichtebene 6 angeordnet. Ein Lichtsender 30 sendet den Lichtstrahl 48 durch Oeffnungen in der Deckplatte 26 und in der Bodenplatte 9 zu einem Lichtempfänger 31. Die vom Lichtempfänger 31 erzeugten analogen Fühlersignale werden mittels der Fühlerleitung 47 der Steuereinrichtung 20 zugeleitet und dort in der elektronischen Schaltung 43 in digitale Intensitätswerte mit einer Auflösung von z. B. 8 Bits umgewandelt. Sobald der Lichtstrahl 48 durch das Blatt 24 beeinträchtigt wird, wird der Lichtempfänger 31 teilweise abgeschattet und die Intensität des Fühlersignals sinkt.

Die Lichtfühler 46 bilden eine zur Schnittlinie S parallele Reihe quer über die Ausrichtebene 6. Beispielsweise ist in der Vorschubrichtung 25 gesehen wenigstens ein Lichtfühler 46 hinter jeder Antriebsrolle 2 bis 5 (Figur 1), eventuell um einen vorbestimmten Betrag von einigen Millimetern seitlich versetzt, in etwa 20 mm Distanz zur Schnittlinie S vorgesehen.

Die elektronische Schaltung 43 stellt zu einem vorbestimmten Zeitpunkt, beispielsweise beim Unterbrechen des Lichtes der ersten Lichtschranke 29 (Figur 4) durch das in der Ausrichtebene 6 eintreffende Blatt 24, den Intensitätswert jedes Fühlersignals fest, der für jeden Lichtfühler 46 im Wertespeicher 44 als Startwert abgelegt wird.

Der Ausrichtvorgang ist in der Figur 6 am Beispiel des direkten Antriebs gemäss der Figur 5 gezeigt. Die Steuereinrichtung 20 ermittelt aus den Signalen der Lichtschranken 29 (Figur 4), wie oben beschrieben, die beiden optimalen Antriebsgruppen bzw. Rollenpaare und wählt die beiden in der Vorschubrichtung 25 direkt hinter den optimalen Rollenpaaren liegenden Lichtfühler 46 aus. Die elektronische Schaltung 43 misst periodisch bei jedem der beiden ausgewählten Lichtfühler 46 den momentanen Intensitätswert des Fühlersignals und bildet mit dem abgespeicherten Startwert die Differenz, die mit einem für jeden Lichtfühler 46 vorbestimmten Differenzwert verglichen wird. Die Differenzwerte sind beispielsweise im Wertespeicher 44 abgelegt.

Die Steuereinrichtung 20 erzeugt gleichzeitig und unabhängig für jeden Schrittmotor 45 gleichförmige Antriebsimpulse, wobei die Rollenpaare das Blatt 24 mit der gleichen Geschwindigkeit wie die hier nicht gezeigten Transporteinrichtungen befördern. Die Schrittmotoren 45 der nicht ausgewählten Rollenpaare weisen auf ihren Leitungen 21 einen hohen Innenwiderstand auf, damit sich das Rollenpaar und sein Schrittmotor 45 möglichst frei drehen. Zusätzlich kann die Andruckrolle 11 dieser Rollenpaare abgehoben werden.

Sobald die vordere Längsberandung des Blattes 24 bis zu den Lichtfühlern 46 vorgeschoben ist, ist der Lichtstrahl 48 wenigstens eines der beiden ausgewählten Lichtfühlern 46 beeinträchtigt. Dem Grad der Abschattung des Lichtempfängers 31 entsprechend sinkt der momentane Intensitätswert des Fühlersignals dieses Lichtfühlers 46 ab. Wenn die Differenz zwischen dem momentanen Intensitätswert und dessen Startwert den vorbestimmten Differenzwert erreicht hat, löst die elektronische Schaltung 43 ein Verschiebesignal aus. Die beiden Transporteinrichtungen geben das Blatt 24 zum Ausrichten frei. Gleichzeitig verlangsamt die Steuereinrichtung 20 den diesem Lichtfühler 46 zugeordneten Schrittmotor 45 oder hält ihn an und blockiert ihn durch ein Dauersignal auf der Leitung 21.

Wird z. B. die Antriebsrolle 2 blockiert, dreht sich das Blatt 24 in der Ausrichtebene 6 um den unter der Antriebsrolle 2 liegenden Drehpunkt, bis der Lichtempfänger 31 des zweiten von der Steuereinrichtung 20 ausgewählten Lichtfühlers 46 durch das Blatt 24 so abgeschattet ist, dass jeder Intensitätswert der beiden Fühlersignale gleich dem um den vorbestimmten Differenzwert verringerten zugehörigen Startwert ist.

Damit ist das Blatt 24 parallel zur Schnittlinie S ausgerichtet, wobei die Genauigkeit des Ausrichtens durch die Wahl des Differenzwertes oder durch Verschieben einer Blende 49 veränderbar ist, die im Lichtweg vor dem Lichtempfänger 31 des Lichtfühlers 46 angeordnet ist. Beide ausgewählte Schrittmotoren 45 erhalten wiederum die gleichförmige Antriebsimpulsreihe, das Verschiebesignal wird ausgeschaltet und das ausgerichtete Blatt 24 wird von der zweiten Transporteinrichtung zur Weiterbeförderung erfasst. Wenn kein Lichtfühler 46 mehr bedeckt ist, ermittelt die elektronische Schaltung 43 erneut die neuen Startwerte der Fühlersignale.

Wird allfällig das Blatt 24 durch seine Drehbewegung wieder aus dem Lichtstrahl 48 des Lichtfühlers 46 zurückgezogen bzw. verändert sich die Differenz zwischen dem momentanen Intensitätswert dieses Lichtfühlers 46 und dessen Startwert, wird die Andruckrolle 11 auf die Antriebrolle 2 abgesenkt und der angehaltene Schrittmotor 45 vor- oder rückwärts angetrieben, bis der vorbestimmte Differenzwert wieder erreicht ist.

In einer kostengünstigen Ausführung der Messgeber sind als optische Sensoren mit Vorteil eine vorbestimmte Anzahl der Lichtschranken 29 (Figur 4) zur Steuerung des Ausrichtvorgangs herangezogen, wobei die Lichtfühler 46 und die Fühlerleitungen 47 entfallen. Diese ausgewählten Lichtschranken 29 werden im folgenden Lichtsensoren 50 genannt. In der Vorschubrichtung 25 gesehen sind die Lichtsensoren 50 unmittelbar vor jedem Rollenpaar angeordnet. Ein Sensorstrahl 51 erzeugt im Lichtempfänger 31' des Lichtsensors 50 ein Signal, das mittels der Kontrolleitung 32 der Steuereinrichtung 20 übermittelt wird. Die Intensitätswerte dieser Signale werden nicht nur qualitativ zusammen mit denen der übrigen Lichtschranken 29 für die Ermittlung der Lage des Blattes 24 verwendet, sondern als Sensorssignale auch quantitativ zur Ermittlung des lokalen Vorschubs in der Steuereinrichtung 20 verarbeitet.

Die elektronische Schaltung 43 bestimmt bis zur ersten Unterbrechung des Lichtes einer der Lichtschranken 29 bei den Lichtsensoren 50 periodisch die oben beschriebenen Intensitätswerte der Sensorssignale und vergleicht sie mit den aus der vorherigen Periode gespeicherten Startwerten.

Sobald die vordere Längsberandung des Blattes 24 in eine der Lichtschranken 29 eindringt, speichert die elektronische Schaltung 43 die Intensitätswerte der Sensorssignale aus der vorhergehenden Periode als Startwerte im Wertespeicher 44 ab. Die Steuereinrichtung 20 versetzt die Schrittmotoren 45 in Umdrehung und senkt die Andruckrollen 11 auf die Antriebsrollen 2 bis 5 (Figur 1) ab. Zum Ausrichten bestimmt die Steuereinrichtung 20, wie oben beschrieben, aus den Signalen der Lichtschranken 29 die beiden optimalen Antriebsgruppen und die beiden zugehörigen Lichtsensoren 50.

Das Blatt 24 wird unter die Antriebsrollen 2 bis 5 transportiert und die Intensität der Sensorstrahlen 51 sinkt wegen der vollständigen Abdeckung durch das Blatt 24 auf einen minimalen Wert. Die elektronische Steuerung 43 vergleicht die Differenz zwischen dem momentanen Intensitätswert der Sensorssignale der beiden ausgewählten Lichtsensoren 50 mit den Startwerten.

Sobald die hintere Längsberandung des Blattes 24 den Sensorstrahl 51 im Lichtsensor 50 teilweise freigibt, beginnt die Intensität des Sensorssignals wieder anzusteigen. Die Steuereinrichtung 20 löst das Ausrichten mittels Verzögern oder Blockieren des Schrittmotors 45 des einen Rollenpaares aus, wenn die eine Differenz zwischen dem momentanen Intensitätswert des Sensorsignals ihres zugeordneten Lichtsensors 50 und dem Startwert den vorbestimmten Differenzwert erreicht hat, und beendet den Vorgang, wenn bei beiden ausgewählten Lichtsensoren 50 der vorbestimmte Differenzwert erreicht ist.

## Patentansprüche

1. Vorrichtung zum Ausrichten eines Blattes (24) in einer Ausrichtebene (6), mit einer Antriebseinheit (7; 45); einem Lagedetektor (16; 29; 46; 50) zum Erkennen des Verdrehungswinkels (α) von Blättern (24); mindestens zwei unabhängig voneinander steuerbaren Antriebsgruppen (2, 7, 11; 3, 7, 11; 4, 7, 11; 5, 7, 11; 2, 1, 45), die jeweils mindestens eine Antriebsrolle (2, 3, 4, 5) aufweisen, deren Achsen quer zur Vorschubrichtung (25) des Blattes (24) angeordnet sind und deren Laufflächen in der Ausrichtebene (6) an einer Andruckrolleneinrichtung (11) anliegen; und mit einer Steuereinrichtung (20), die auf den von dem Positionsdetektor (16; 29; 46; 50) erkannten Verdrehungswinkel (α) anspricht, um in Abhängigkeit des Verdrehungswinkels (α) die lokale Vorschubgeschwindigkeit jeder der beiden Antriebsgruppen in einer eine Verdrehung verringernden Betriebsart zu steuern,
dadurch gekennzeichnet,
daß mindestens drei Antriebsrollen (2; 3; 4; 5) vorhanden sind,
daß jeweils zwei benachbarte Antriebsrollen (2; 3; 4; 5) einen Abstand (A) aufweisen, der kleiner als die um einen vorbestimmten Faktor verkleinerte Länge (B) der quer zur Vorschubrichtung (25) befindlichen kante des kleinsten Blattes (24) aus einem vorbestimmten Satz verschiedener Blattgrößen ist, und
daß die Steuereinrichtung (20) zum Ermitteln von zwei zum Ausrichten des Blattes (24) optimalen Antriebsrollen (2; 3; 4; 5) aus den Signalen des Lagedetektors (29; 16; 46; 50) eingerichtet ist.

2. Vorrichtung nach Anspruch 1, dadurch gekennzeichnet,
daß eine Sensoreinrichtung (16; 46; 50) vorgesehen ist, um nach Beginn der die Verdrehung verringernden Betriebsart unabhängig von den Antriebsgruppen den tatsächlichen lokalen Vorschub des Blattes (24) festzustellen, und
daß die Steuereinrichtung (20) auch auf die Sensoreinrichtung (16; 46; 50) anspricht, um die lokale Vorschubgeschwindigkeit jeder Antriebsgruppe nach Beginn der die Verdrehung verringernden Betriebsart zu steuern.

3. Vorrichtung nach Anspruch 1 oder 2, dadurch gekennzeichnet, daß der Lagedetektor eine Reihe von Lichtschranken (29) zum Erkennen der Position des Blattes (24) vor den Antriebsrollen (2; 3; 4; 5) aufweist.

4. Vorrichtung nach einem der Ansprüche 1 bis 3, dadurch gekennzeichnet, daß die Antriebsrollen (2; 3; 4; 5) auf einer gemeinsamen Antriebswelle (1) angeordnet sind und daß zum gemeinsamen Antrieb der Antriebsrollen (2; 3; 4; 5) mittels der Antriebswelle (1) ein einziger Antriebsmotor (7) vorgesehen ist.

5. Vorrichtung nach Anspruch 4, dadurch gekennzeichnet, daß jede Andruckrolle (11) eine entsprechende Abhebeeinrichtung (19) aufweist, um sie von den Antriebsrollen (2, 3, 4 bis 5) abzuheben, wobei die Abhebeeinrichtungen (19) von der Steuereinrichtung (20) unabhängig voneinander gesteuert werden.

6. Vorrichtung nach Anspruch 4 soweit von Anspruch 2 abhängig, dadurch gekennzeichnet, daß die Sensoreinrichtung eine Vielzahl von Winkelgebern (16) aufweist, die eine Drehbewegung entsprechender auf der gemeinsamen Antriebswelle (1) frei drehbarer Meßräder (12; 13; 14; 15) abtasten, wobei jeweils ein Kontaktrad (17) auf der Kontaktfläche jedes der Meßräder (12; 13; 14; 15) abrollt.

7. Vorrichtung nach Anspruch 6, dadurch gekennzeichnet, daß jedes Meßrad (12, 13, 14, 15) eine Bremseinrichtung (28) mit vorbestimmter, einstellbarer Wirkung aufweist.

8. Vorrichtung nach Anspruch 2, dadurch gekennzeichnet, daß jede Sensoreinrichtung einen optischen Sensor (46; 50) aufweist, der einen Lichtsender (30) auf der einen Seite der Ausrichtebene (6) und einen Lichtempfänger (31; 31') auf deren anderer Seite umfaßt, und daß die Steuereinrichtung (20) zum Messen des lokalen Vorschubs im Bereich jedes optischen Sensors (46; 50) auf der Grundlage des Grads der Abschattung des entsprechenden Lichtempfängers (31; 31') durch das Blatt (24) eingerichtet ist.

9. Vorrichtung nach einem der Ansprüche 1 bis 3, dadurch gekennzeichnet, daß jede Antriebsrolle (2; 3; 4; 5) einen Schrittmotor (45) aufweist, der auf unabhängige Weise durch die Steuereinrichtung (20) gesteuert wird.

10. Vorrichtung nach einem der vorhergehenden Ansprüche, wobei das Blatt (24) eine Banknote umfaßt und die Vorrichtung zur Ausrichtung der Banknote eingerichtet ist.

## Claims

1. Apparatus for aligning a sheet (24) in a plane of alignment (6), comprising a drive unit (7; 45); a position detector (16; 29; 46; 50) for detecting the angle of twist (α) of sheets (24); at least two independently controllable drive groups (2, 7, 11; 3, 7, 11; 4, 7, 11; 5, 7, 11; 2, 1, 45) each comprising at least one drive roller (2, 3, 4, 5), the axes of which rollers are arranged transversely to the feed direction (25) of the sheet (24) and the rolling surfaces of which rollers are in contact with pressure roller means (11) in the plane of alignment (6); and comprising a control device (20) responsive to the angle of twist (α) detected by the position detector (16; 29; 46; 50) to control the local feed speed of each of the two drive groups, in dependence upon the angle of twist (α), in a twist-reducing mode of operation,
characterised in that
there are at least three drive rollers (2; 3; 4; 5),
any two adjacent drive rollers (2; 3; 4; 5) are spaced apart by a distance (A) that is less than the length (B), reduced by a predetermined factor, of the edge, disposed transverse to the feed direction (25), of the smallest sheet (24) of a predetermined set of different sheet sizes, and
the control device (20) is operable to determine from the signals of the position detector (29; 16; 46; 50) two optimum drive rollers (2; 3; 4; 5) for aligning the sheet (24).

2. Apparatus according to claim 1, characterised in that
a sensor device (16; 46; 50) is provided in order to ascertain the actual local feed of the sheet (24), independently of the drive groups, after commencement of the twist-reducing mode of operation, and
the control device (20) is also responsive to the sensor device (16; 46; 50) to control the local feed speed of each drive group after commencement of the twist-reducing mode of operation.

3. Apparatus according to claim 1 or 2, characterised in that the position detector comprises a row of light barriers (29) for detecting the position of the sheet (24) upstream of the drive rollers (2; 3; 4; 5).

4. Apparatus according to any one of claims 1 to 3, characterised in that the drive rollers (2; 3; 4; 5) are arranged on a common drive shaft (1) and a single drive motor (7) is provided for driving the drive rollers (2; 3; 4; 5) together by means of the drive shaft (1).

5. Apparatus according to claim 4, characterised in that each pressure roller (11) has a respective lifting device (19) for lifting it from the drive rollers (2, 3, 4 to 5), the lifting devices (19) being controlled independently of one another by the control device (20).

6. Apparatus according to claim 4 as appended to claim 2, characterised in that the sensor device comprises a plurality of angle encoders (16) which sense rotary movement of respective measuring wheels (12; 13; 14; 15) which are freely rotatable on the common drive shaft (1), a respective contact wheel (17) rolling on the contact surface of each of the measuring wheels (12; 13; 14; 15).

7. Apparatus according to claim 6, characterised in that each measuring wheel (12, 13, 14, 15) has a braking device (28) having a predetermined, adjustable action.

8. Apparatus according to claim 2, characterised in that each sensor device has an optical sensor (46; 50) which comprises a light emitter (30) on one side of the plane of alignment (6) and a light receiver (31; 31') on the other side thereof, and the control device (20) is operable to measure the local feed in the region of each optical sensor (46; 50) on the basis of the degree of shading of the respective light receiver (31; 31') by the sheet (24).

9. Apparatus according to any one of claims 1 to 3, characterised in that each drive roller (2; 3; 4; 5) has a stepping motor (45) which is controlled independently by the control device (20).

10. Apparatus according to any one of the preceding claims, wherein the sheet (24) includes a bank note and the apparatus is operable to align the bank note.

## Revendications

1. Dispositif pour aligner une feuille (24) dans un plan d'alignement (6), comportant une unité d'entraînement (7;45); un détecteur de position (16;29;46;50) pour identifier l'angle de pivotement (α) de feuilles (24); au moins deux groupes d'entraînement (2,7,11;3,7,11;4,7,11; 5,7,11;2,1,45) pouvant être commandés indépendamment l'un de l'autre et qui possèdent chacun au moins un rouleau d'entraînement (2,3,4,5), les axes de ces rouleaux s'étendant transversalement par rapport à la direction d'avance (25) de la feuille (24), tandis que leurs surfaces de roulement s'appliquent dans le plan d'alignement (6) contre un dispositif (11) à rouleaux de serrage; et comportant un dispositif de commande (20), qui répond à l'angle de pivotement (α) identifié par le détecteur de position (16;29;46;50) de manière à commander, en fonction de l'angle de pivotement (α), la vitesse locale d'avance de chacun des deux groupes d'entraînement, dans un mode de fonctionnement qui réduit un pivotement,
caractérisé en ce
qu'il est prévu au moins trois rouleaux d'entraînement (2;3;4;5),
que respectivement deux rouleaux d'entraînement voisins (2;3;4;5) sont séparés par une distance (A), qui est inférieure à la longueur (B), réduite d'un facteur prédéterminé, du bord qui s'étend transversalement par rapport à la direction d'avance (25), de la feuille la plus petite (24) faisant partie d'un ensemble prédéterminé de feuilles ayant des formats différents, et
que le dispositif de commande (20) est agencé de manière à déterminer deux rouleaux d'entraînement (2;3;4; 5), qui sont optimum pour l'alignement de la feuille (24), à partir des signaux du détecteur de position (29;16;46; 50).

2. Dispositif selon la revendication 1, caractérisé en ce
qu'il est prévu un dispositif de détection (16; 46;50) servant à fixer l'avance locale effective de la feuille (24), après le début du type de fonctionnement réduisant le pivotement, indépendamment des groupes d'entraînement, et
que le dispositif de commande (20) répond également au dispositif de détection (16;46;50), pour commander la vitesse locale d'avance de chaque groupe d'entraînement après le début du type de fonctionnement qui réduit le pivotement.

3. Dispositif selon la revendication 1 ou 2, caractérisé en ce que le détecteur de position comporte une série de relais photoélectriques (29) servant à identifier la position de la feuille (24) en amont des rouleaux d'entraînement (2;3;4;5).

4. Dispositif selon l'une des revendications 1 à 3, caractérisé en ce que les rouleaux d'entraînement (2;3; 4;5) sont disposés sur un arbre commun d'entraînement (1) et que, pour l'entraînement commun des rouleaux d'entraînement (2;3;4;5) au moyen de l'arbre d'entraînement (1), il est prévu un seul moteur d'entraînement (7).

5. Dispositif selon la revendication 4, caractérisé en ce que chaque galet de pression (11) possède un dispositif correspondant d'écartement (19), servant à l'écarter des rouleaux d'entraînement (2,3, 4 à 5), les dispositifs d'écartement (19) étant commandés indépendamment les uns des autres par le dispositif de commande (20).

6. Dispositif selon la revendication 4, dans la mesure où elle dépend de la revendication 2, caractérisé en ce que le dispositif de détection comporte une multiplicité de transmetteurs d'angle (16), qui explorent un mouvement de rotation de roues de mesure correspondantes (12;13;14; 15) pouvant tourner librement sur l'arbre commun d'entraînement (1), une roue de contact (17) roulant respectivement sur la surface de contact de chacune des roues de mesure (12;13;14;15).

7. Dispositif selon la revendication 6, caractérisé en ce que chaque roue de mesure (12,13,14,15) comporte un dispositif de freinage (28), qui a une action réglable prédéterminée.

8. Dispositif selon la revendication 2, caractérisé en ce que chaque dispositif de détection comporte un capteur optique (46;50), qui comprend une source de lumière (30) située d'un côté du plan d'alignement (6) et un récepteur de lumière (31;31') situé de l'autre côté de ce plan, et que le dispositif de commande (20) est agencé de manière à mesurer l'avance locale dans la zone de chaque capteur optique (46;50) sur la base du degré de l'ombrage porté par la feuille (24) sur le récepteur de lumière correspondant (31;31').

9. Dispositif selon l'une des revendications 1 à 3, caractérisé en ce que chaque rouleau d'entraînement (2; 3;4;5) comporte un moteur pas-à-pas (45), qui est commandé de façon indépendante par le dispositif de commande (20).

10. Dispositif selon l'une des revendications précédentes, dans lequel la feuille (24) est un billet de banque et le dispositif est agencé pour aligner le billet de banque.
